# EUROPEAN PATENT SPECIFICATION

(11) **EP 2 307 155 B1**
(45) Date of publication and mention of the grant of the patent: **16.11.2011**
(21) Application number: 09742040.0
(22) Date of filing: 05.05.2009
(51) Int. Cl.: B21F 11/00, B21F 23/00, B23D 33/10

(54) **APPARATUS TO FEED AND SHEAR METAL BARS, AND RELATIVE METHOD**
VORRICHTUNG ZUM ZUFÜHREN UND SCHEREN VON METALLSTANGEN UND VERWANDTES VERFAHREN
APPAREIL POUR FAIRE AVANCER ET POUR CISAILLER DES BARRES MÉTALLIQUES ET PROCÉDÉ CORRESPONDANT

(30) Priority: 06.05.2008 IT UD20080097
(43) Date of publication of application: 13.04.2011
(73) Proprietor: M.E.P. Macchine Elettroniche Piegatrici S.p.A., 33010 Reana del Rojale (UD) (IT)
(72) Inventor: DEL FABRO, Giorgio, I-33100 Udine (IT)
(74) Representative: Petraz, Davide Luigi
(86) International application number: PCT/EP2009/055379
(87) International publication number: WO 2009/135822

(56) References cited:
- EP-A- 0 186 281
- DE-A1- 2 014 697
- GB-A- 1 372 761

## Description

### FIELD OF THE INVENTION

The present invention concerns an apparatus to feed and shear metal bars and the relative method, usable in association with automatic machines, such as for example stirrup machines, bending machines, shaping machines, binding machines, storage apparatuses or other machines for working or storing bars sheared to size. In particular, the apparatus according to the invention allows to feed, substantially continuously, metal bars sheared to size to an automatic machine, eliminating down times and waiting times, facilitating the discharge of the off-cuts and increasing shearing accuracy and productivity of the machine.

**Document** GB-A-1.372.761 **discloses a conveyor for rods having the features of the preamble of claims 1 and 9.**

### BACKGROUND OF THE INVENTION

Automatic machines for working metal bars sheared to size are known, such as for example stirrup machines, bending machines, shaping machines, binding machines or others, which work one or more bars at a time in order to produce shaped products for the building trade or other type of product. Stores are also known, suitable to collect segments of bars sheared to size.

Upstream of such machines, or upstream of the collection stores, a feed store is normally provided in which bars of different diameter are disposed in homogeneous bundles, and from which the bars to be sent to the machine are picked up on each occasion, according to the specific requirements.

Apparatuses are also known, disposed between the feed store and the automatic machine, and provided with shearing units suitable to feed to the machine segments of bars of the desired length.

It is known that, in order to guarantee the correct measurement and sequential shearing of the bars to be sent to the machine, the latter are first aligned with each other on a positioning and transport plane, upstream of the shearing unit, by butting the leading ends, and subsequently transported by a transport member, for example with rollers, belt, chain or other, toward and beyond the shearing unit. The bars are moved until they are taken into abutment with their leading ends, against specific stop elements positioned at fixed pitches downstream of the shearing unit, and able to define the sheared measurements of the bars.

Some known apparatuses also have the possibility of moving the positioning and transport plane and the shearing unit with respect to each other, so as to adjust the shearing of the bars to measurements different from those defined by the fixed pitches of the stop elements.

This type of known apparatus not only has to provide different movement means for the shearing unit and/or the plane, and also members to activate the stop elements, but also effect a butting operation on the lead ends of the bars, thus causing a tail-end excess or off-cut, due to the difference between the multiple sizes of the segments sheared and the initial length of the individual bars.

One of the main disadvantages of this type of known apparatus is the problem of discharging said off-cuts, to allow to start shearing new bars.

Shearing apparatuses are also known in which the alignment unit comprises a butting member suitable to cooperate with the tail ends of the metal bars in order to align them longitudinally with respect to each other, and a thruster member configured to thrust the metal bars acting on their tail ends, to take them toward and beyond the shearing unit.

The thruster member acts until it takes the tail ends to a predetermined initial distance from the shearing unit. The distance is advantageously a multiple of the measurement of the individual segments into which the metal bars are to be divided.

This last type of known apparatus allows to discharge the off-cuts before starting the shearing steps, giving advantages in terms of time and costs of production.

Under some operating conditions, however, it is possible that the bars, butted by their tail end, especially during the thrusting step and with bars having a medium/small diameter, reciprocally move due to inertia, thus partly losing their butted condition. Furthermore, difficulties have been found in guaranteeing an effective contact between the butting member and the tail ends of all the bars to be butted.

One purpose of the present invention is to produce an apparatus to feed and shear metal bars that allows to considerably reduce the down times due to the operations to discharge the off-cuts, without providing complex members to pick up and discharge them.

Another purpose of the present invention is to produce an apparatus that guarantees that the initial alignment of all the bars is maintained, both in the butting step and also during all the sequential shearing steps.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

An apparatus according to the present invention is applied to feed metal bars to an automatic machine, and to shear said bars into segments.

The apparatus according to the present invention comprises at least a shearing unit able to shear the metal bars sequentially into segments of a desired length and to feed them to a work machine, and an alignment and translation unit which feeds the metal bars to the shearing unit and is provided with a butting member suitable to cooperate with the tail ends of the bars so as to align them longitudinally with respect to each other.

According to a characteristic feature of the present invention, the butting member comprises at least a magnetic portion, facing toward the tail ends of the metal bars. The magnetic portion is conformed so as to generate a magnetic or electromagnetic force of attraction on the tail ends of the metal bars, so as to attract them towards itself and keep the relative tail ends substantially aligned and in contact with the butting member, also during any possible reciprocal movements of the bars during the butting and thrusting operations.

In this way, the tail ends of the metal bars are magnetically attracted and remain attracted by the magnetic portion of the butting member. This guarantees that all the metal bars, even those of average/small diameter, contact the butting member during the butting step with their tail end, and are thus all equally butted.

Furthermore, since the butting is carried out on the tail ends of the metal bars, there is a single butting operation, in an initial step that precedes the shearing to size step, to define the positioning of the off-cut to be sheared and discharged downstream of the shearing unit and in the same direction of feed of the bars. This gives a considerable advantage in the continuity of feed of the metal bars to be sheared and therefore the segments to be fed to the automatic machine.

The functional combination of the tail-wise butting and the action of magnetic attraction exerted by the butting member guarantees a substantially uniform shearing and positioning of the metal bars, and hence great accuracy and repeatability in making the segments of bars exiting from the shearing cycle.

According to a variant, the magnetic portion comprises an electromagnet able to be selectively activated and/or adjusted, according to the different operating steps and/or types of metal bars.

According to another variant, the magnetic portion comprises a permanent magnet.

According to a variant, the butting member is selectively mobile with respect to the shearing unit, in a direction substantially parallel to the longitudinal axis of the bars, so as to function as a thruster too, acting on the tail ends of the metal bars, to take them toward and beyond the shearing unit.

In this solution, the metal bars subjected to longitudinal thrust are substantially prevented from making uncontrolled reciprocal longitudinal movements due to inertia, since they all remain in contact with the butting member, due to the action of magnetic attraction effected by the magnetic portion.

Therefore, there is a substantial guarantee that the movement and shearing effected are substantially equivalent for all the metal bars fed, giving the advantage of uniformity and accuracy of the segments, and the length of the latter can be defined only by controlling the advance of the butting member.

According to a variant, the alignment unit comprises a butting member and a thruster member operatively independent of each other and able to act on the tail ends of the metal bars at different times and in different ways.

According to another variant, the butting member in its operating thrust condition, or the thruster member when provided independent, acts until it takes the tail ends to a predetermined initial distance from the shearing unit. This distance is advantageously a multiple of the measurement of the individual segments into which the metal bars are to be divided.

In this way the off-cuts, that is, the part of the bar that exceeds the multiple of the length of the individual segment, are generated in correspondence with the leading ends of the bars and no longer in correspondence with the tail ends, facilitating the discharge of the off-cuts.

According to another variant, downstream of the shearing unit there is a distribution means that selectively directs the segments sheared into specific containing baskets and/or toward one or more automatic working machines.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic plane view of an apparatus to feed and shear metal bars according to the present invention, in a first operating step;
- fig. 2 is a schematic plane view of the apparatus in fig. 1, in a second operating step;
- fig. 3 is a schematic plane view of the apparatus in fig. 1, in a third operating step;
- fig. 4 is a schematic plane view of the apparatus in fig. 1, in a fourth operating step;
- fig. 5 is a schematic plane view of the apparatus in fig. 1, in a fifth operating step;
- fig. 6 is a schematic plane view of the apparatus in fig. 1, in a sixth operating step;
- fig. 7 is a schematic plane view of the apparatus in fig. 1, in a seventh operating step;
- fig. 8 is a schematic lateral view of an enlarged detail of the apparatus in fig. 1.

### DETAILED DESCRIPTION OF A PREFERENTIAL FORM OF EMBODIMENT

With reference to the attached drawings, an apparatus 10 according to the present invention is configured to feed and shear, substantially continuously, a plurality of metal bars 11 into segments 12 of a desired length, and to feed them to one or more automatic machines, of a known type and not shown here, for example a stirrup-making machine, a caging machine, a store or other analogous or comparable machine.

In particular, the apparatus 10 according to the invention is suitable to pick up the metal bars 11 from a feed store, also of a known type and not shown here, in which the latter are grouped together, according to their diameter, in a plurality of homogeneous bundles, for example disposed adjacent to each other.

The apparatus 10 according to the invention comprises in sequence a feed unit 13 that allows to feed the metal bars 11, an alignment and translation unit 15 that allows to align the metal bars 11 fed by the feed unit 13 and moves them in a guided manner toward a predefined shearing axis "C", and shears 16 that make the segments 12 from the metal bars 11 moved by the feed unit 13.

The shears 16 are of a substantially known type and will not be described in detail here; they are able to shear the bars 11 into segments 12 along the shearing axis "C".

In particular, the feed unit 13 comprises a plane 14 provided with rollers, chains or other translation means, able to act longitudinally on the bars 11 so as to take them into correspondence with the alignment and translation unit 15.

The plane 14 also comprises, pivoted in correspondence with one flank facing toward the alignment and translation unit 15, a plurality of stopping levers 18 which selectively allow to hold the metal bars 11 temporarily on the plane 14, or to feed them to the alignment and translation unit 15.

The alignment and translation unit 15 comprises a butting member 17 positioned substantially parallel to the feed unit 13, and suitable to cooperate with the tail ends 11a of the metal bars 11 picked up from the feed store, so as to align the metal bars 11 longitudinally with respect to the tail ends 11a, and thus carry out a tail-wise butting of the bars 11.

In this case, the butting member 17 comprises an abutment wall 20 against which the tail ends 11a of the metal bars 11 rest, reciprocally aligned, thus carrying out a tail-wise butting of the bars 11.

The abutment wall 20 comprises an abutment surface 20a, on which a magnetic portion 19 is provided, facing toward the tail ends 11a of the metal bars 11.

In this way, the tail ends 11a of the metal bars 11 are attracted into contact with the abutment surface 20a by the force of magnetic attraction generated by the magnetic portion 19, and then all held against the abutment wall 20, to be uniformly butted with respect to the relative tail ends 11a.

In this case, the magnetic portion 19 comprises one or more electromagnets, of a substantially known type, which are able to be selectively activated and modulated in order to drive/regulate the magnetic attraction on the tail ends 11a of the metal bars 11.

According to a variant, the magnetic portion 19 comprises one or more permanent magnets, each generating a determinate force of magnetic attraction.

The abutment wall 20 is selectively mobile toward the shearing axis "C", so as to progressively thrust the metal bars 11, as will be described in more detail hereafter, into association with the shears 16 and, at the same time, keep them butted tail-wise by means of the action of the magnetic portion 19.

In this case the abutment wall 20 is associated at the rear with a thruster member 21 disposed substantially parallel to the direction of feed of the bars 11, and able to thrust selectively the abutment wall 20 to move the metal bars 11 toward the shears 16.

A position transducer 30 is associated with the thruster member 21, and allows to verify the entity of the linear advance of the metal bars 11 held by the magnetic portion 19 of the abutment wall 20, and to easily calculate the distance "D" of the abutment wall 20 with respect to the shears 16.

The alignment and translation unit 15 comprises a first transport member 23 disposed downstream of the abutment wall 20 and in line with and upstream of the shears 16, and a second transport member 25 disposed downstream and in line with the shears 16.

In this case, both the first transport member 23 and the second transport member 25 substantially consist of a rollerway 24, on which the metal bars 11 slide, moved by the moving abutment wall 20.

The first transport member 23 also comprises a lateral shoulder 31, able to hold the metal bars 11 laterally before shearing.

According to a variant, one or both of the first transport member 23 and the second transport member 25 substantially consists of a driven conveyor belt provided externally with a plurality of magnetic elements disposed transverse to the metal bars 11, so as to effect a controlled transport of the latter.

The alignment and translation unit 15 also comprises a distribution member 26, associated downstream and in parallel with the second transport member 25, and able to direct the segments of bar 12 toward relative automatic machines, stores or other users.

In this case the distribution member 26 comprises a rollerway disposed and configured so as to move the segments 12 parallel to the axis of movement of the metal bars 11 along the rollerway 24, that is, forward or backward, with respect to the normal direction of feed of the metal bars 11.

The method according to the present invention to feed and shear segments 12 starting from metal bars 11 with the apparatus 10 as described heretofore is as follows.

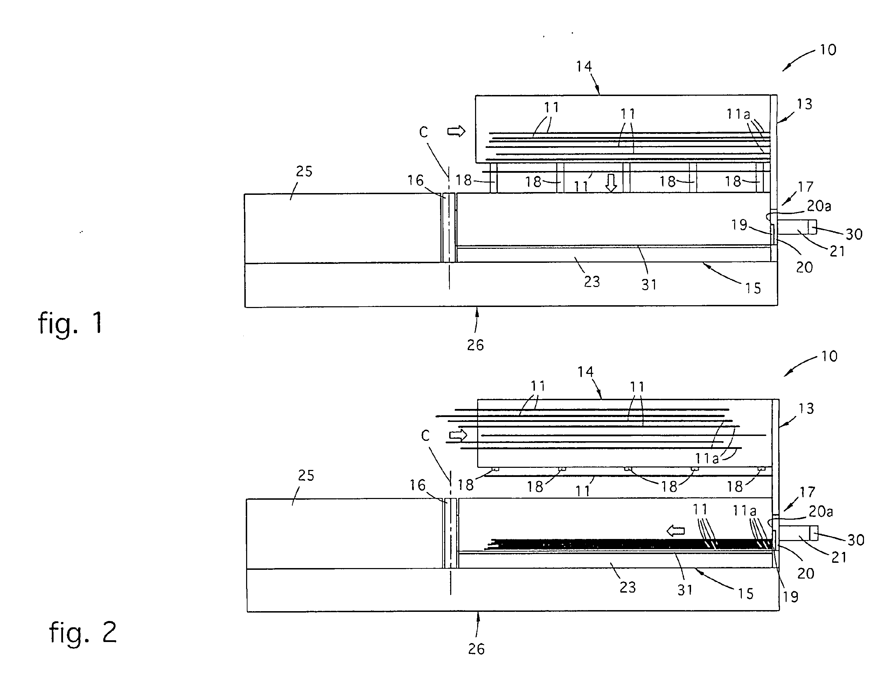

With reference to figs. 1 to 7, in a first step of the method according to the present invention, a plurality of metal bars 11 are fed from the feed store and, once on the plane 14, are fed toward the alignment and translation unit 15 by means of the stopping levers 18 (fig. 1).

The metal bars 11 are then positioned on the first transport member 23 close to the lateral shoulder 31, and the abutment wall 20 is made to advance by the thruster member 21 until it contacts the tail ends 11a of the metal bars 11.

Thanks to the action of the magnetic portion 19, all the tail ends 11a of the metal bars 11 move into contact with the abutment surface 20a of the abutment wall 20 (fig. 2).

Simultaneously, the stopping levers 18 are raised, and a new plurality of metal bars 11 are fed onto the plane 14.

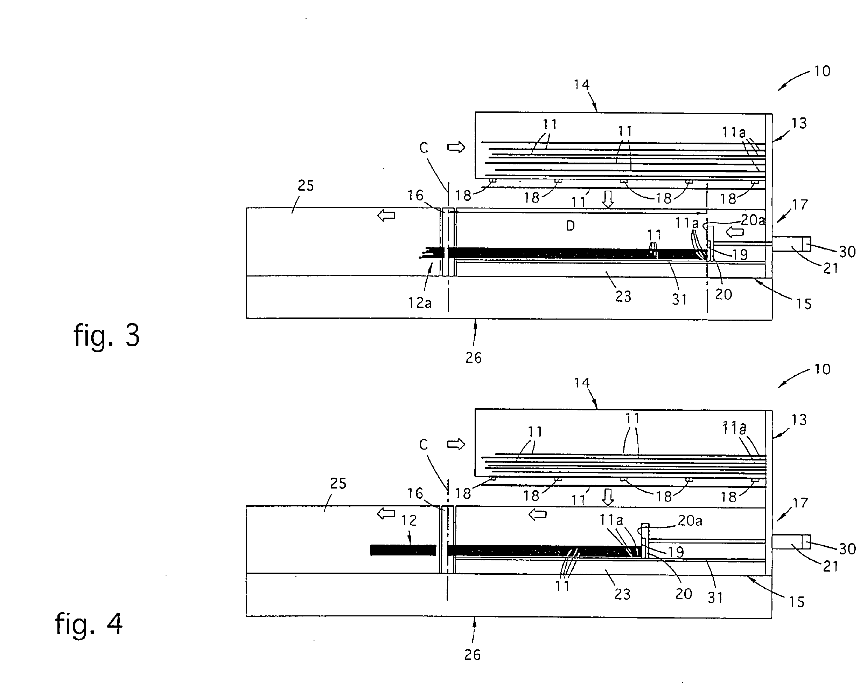

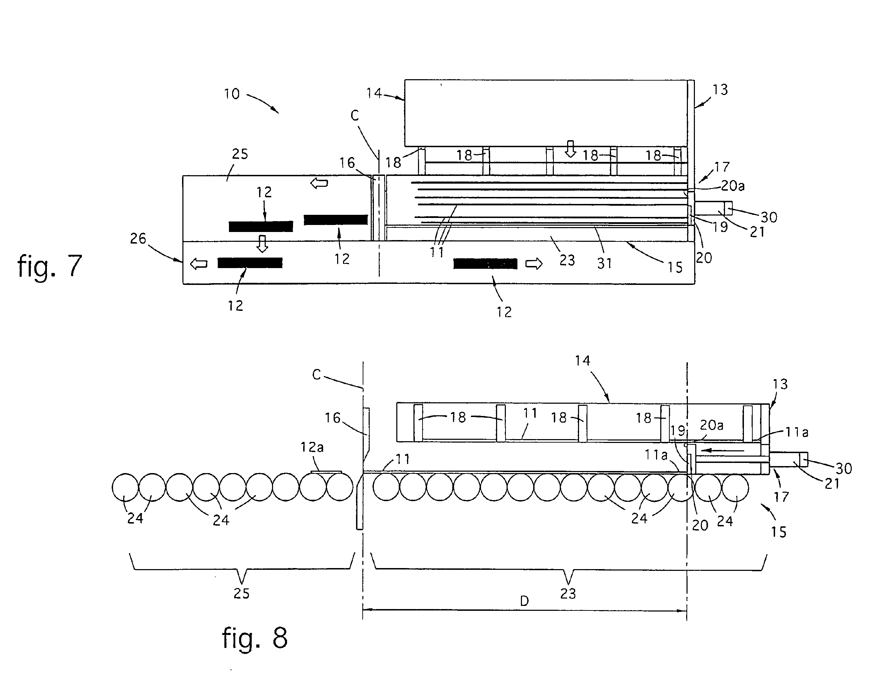

Subsequently the thruster member 21 is activated, which thrusts the metal bars 11 longitudinally by means of the abutment wall 20 until it takes their tail ends 11a to a determinate distance "D" from the shears 16. The distance D is chosen as a function of the initial length of the metal bars 11 and the number and length of the individual segments 12 to be made (figs. 3 and 8).

For example, if we want to make four segments 12 of about 3 meters each, from metal bars 11 of about 13 meters, the distance D is set at about 12 meters. In this way, the metal bars 11 pass beyond the shears 16 with their leading ends, defining downstream of the shears 16 relative off-cuts 12a with a length of about 1 meter.

The off-cuts 12a are thus picked up by the second transport member 25 and discharged by the latter to a zone immediately downstream of the shears 16.

At this point the abutment wall 20 keeps the metal bars 11 to be sheared aligned and moves them, making them advance progressively by a determinate amount.

The amount the metal bars 11 are fed toward the shears 16 is commanded by the thruster member 21 and controlled by the position transducer 30, thus guaranteeing the uniform shearing of the various segments 12.

The second transport member 25 moves the sheared segments 12 in a coordinated manner.

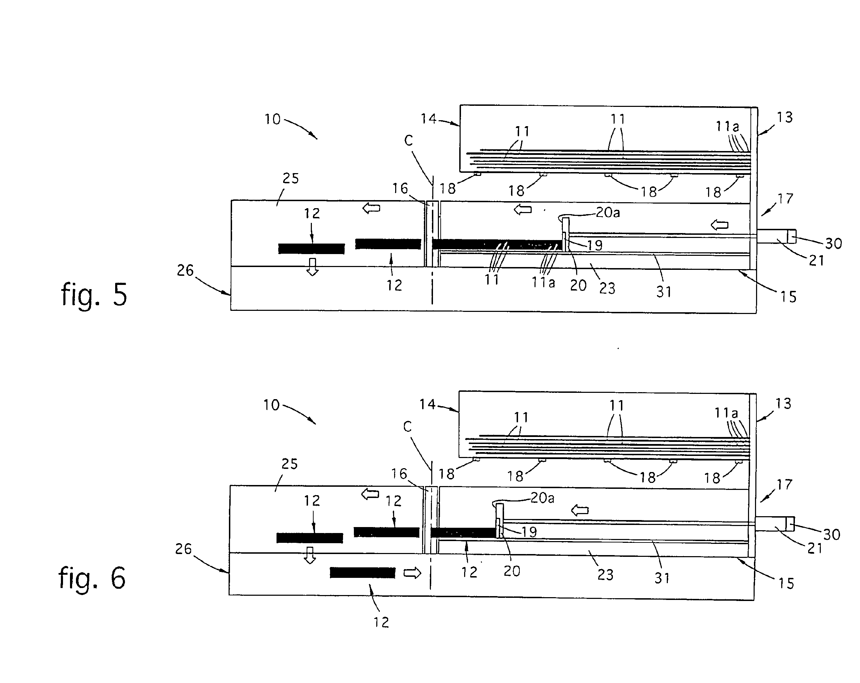

Subsequently, as shown in sequence in figs. 5, 6 and 7, the sheared segments 12 are alternately moved by the distribution member 26, forward and backward with respect to the feed imparted to them by the second transport member 25.

At the same time as the last cut is made to the metal bars 11, the stopping levers 18 are lowered, allowing new metal bars 11 butted tail-wise to be positioned on the first transport member 23 and immediately start a new shearing and feeding cycle.

It is clear however that modifications and/or additions of parts may be made to the apparatus 10 as described heretofore, without departing from the field and scope of the present invention.

It is also clear that, although the present invention has been described with reference to specific examples, a person of skill in the art shall certainly be able to achieve many other equivalent forms of apparatus to feed and shear metal bars, and relative method, having the characteristics as set forth in the claims and hence all coming within the field of protection defined thereby.

## Claims

1. Apparatus to feed and shear metal bars, comprising at least a shearing unit (16) able to shear said metal bars (11) sequentially into segments (12) of desired length, and an alignment and translation unit (15), able to feed said metal bars (11) to said shearing unit (16), provided with a butting member (17) suitable to cooperate with the tail ends (11a) of said metal bars (11) in order to align them longitudinally with respect to each other, **characterized in that** said butting member (17) comprises at least a magnetic portion (19) facing toward the tail ends (11a) of said metal bars (11), and conformed so as to generate a magnetic or electromagnetic attraction force on said tail ends (11a), so as to attract said metal bars (11) to itself and to keep the relative tail ends (11a) substantially aligned and in contact with said butting member (17).

2. Apparatus as in claim 1, **characterized in that** said magnetic portion (19) comprises an electromagnet, able to be selectively activated and/or adjusted, as a function of the different operating steps and/or types of metal bars (11).

3. Apparatus as in claim 1, **characterized in that** said magnetic portion (19) comprises a permanent magnet.

4. Apparatus as in any claim hereinbefore, **characterized in that** said butting member (17) is selectively mobile with respect to said shearing unit (16) in a direction substantially parallel to a longitudinal axis of said metal bars (11), so as to function as a thruster too, acting on the tail ends (11a) of the metal bars (11), to take them toward and beyond the shearing unit (16).

5. Apparatus as in any claim hereinbefore, **characterized in that** said butting member (17) comprises an abutment wall (20) against which the tail ends (11a) of the metal bars (11) fed are able to rest.

6. Apparatus as in claim 5, **characterized in that** said abutment wall (20) comprises an abutment surface (20a), on which said magnetic portion (19) is provided, facing toward the tail ends (11a) of the metal bars (11).

7. Apparatus as in any claim hereinbefore, **characterized in that** said alignment and translation unit (15) comprises a butting member and a thruster member operatively independent of each other and able to act on the tail ends (11a) of the metal bars (11) at different times and in different ways.

8. Apparatus as in any claim hereinbefore, **characterized in that** it comprises distribution means (26) disposed downstream of said shearing unit (16) and able to selectively direct the segments (12) sheared into specific containing baskets and/or toward one or more automatic work machines.

9. Method to feed and shear metal bars (11), comprising at least a first step in which a plurality of said metal bars (11) are aligned longitudinally by means of an alignment and translation unit (15); a second step in which said aligned metal bars (11) are fed to at least a shearing unit (16); and a third step in which said metal bars (11) are sheared sequentially into segments (12) of a desired length by means of said shearing unit (16), **characterized in that** in said first step at least a first substep is provided in which said metal bars (11) are aligned longitudinally with respect to each other by the action of a butting member (17) acting on the respective tail ends (11a) and provided with at least a magnetic portion (19) facing toward the tail ends (11a) of said metal bars (11), and conformed so as to generate a magnetic or electromagnetic attraction force on said tail ends (11a), so as to attract said metal bars (11) to itself and to keep the relative tail ends (11a) substantially aligned and in contact with said butting member (17).

10. Method as in claim 9, **characterized in that** in said first step a second substep is provided in which said metal bars (11) are thrust by their tail ends (11a) by said butting member (17), until said metal bars (11) are taken toward and beyond said shearing unit (16).

11. Method as in claim 10, **characterized in that** said butting member (17) thrusts said metal bars (11) at least until it takes said tail ends (11a) to a predetermined initial distance (D) from said shearing unit (16).

12. Method as in claim 11, **characterized in that** said predetermined initial distance (D) is a multiple of the measurement and number of said segments (12) into which said metal bars (11) are to be divided.

## Patentansprüche

1. Vorrichtung zum Zuführen und Schneiden von Metallstangen, aufweisend mindestens eine Schneideeinheit (16), die in der Lage ist, die Metallstangen (11) nacheinander in Segmente (12) einer gewünschten Länge zu schneiden, und eine Ausricht- und Verschiebe-Einheit (15), die in der Lage ist, die Metallstangen (11) der Schneideeinheit (16) zuzuführen, wobei sie mit einem Anstoßelement (17) versehen ist, das geeignet ist, mit den hinteren Enden (11a) der Metallstangen (11) zusammenzuwirken, um sie bezüglich einander in Längsrichtung auszurichten, **dadurch gekennzeichnet, dass** das Anstoßelement (17) mindestens einen Magnetabschnitt (19) aufweist, der den hinteren Enden (11a) der Metallstangen (11) zugewandt ist und angepasst ist, um eine magnetische oder elektromagnetische Anziehungskraft auf die hinteren Enden (11a) auszuüben, um die Metallstangen (11) anzuziehen und die jeweiligen hinteren Enden (11a) im Wesentlichen ausgerichtet und in Kontakt mit dem Anstoßelement (17) zu halten.

2. Vorrichtung gemäß Anspruch 1, **dadurch gekennzeichnet, dass** der Magnetabschnitt (19) einen Elektromagneten aufweist, der in Abhängigkeit von den verschiedenen Funktionsschritten und/oder Typen von Metallstangen (11) wahlweise aktivierbar und/oder anpassbar ist.

3. Vorrichtung gemäß Anspruch 1, **dadurch gekennzeichnet, dass** der Magnetabschnitt (19) einen Dauermagneten aufweist.

4. Vorrichtung gemäß irgendeinem vorhergehenden Anspruch, **dadurch gekennzeichnet, dass** das Anstoßelement (17) bezüglich der Schneideeinheit (16) in einer zu einer Längsachse der Metallstangen (11) im Wesentlichen parallelen Richtung wahlweise bewegbar ist, um darüber hinaus als eine Schubvorrichtung zu wirken, die auf die hinteren Enden (11a) der Metallstangen (11) einwirkt, um sie in Richtung zu der Schneideeinheit (16) und über diese hinaus zu befördern.

5. Vorrichtung gemäß irgendeinem vorhergehenden Anspruch, **dadurch gekennzeichnet, dass** das Anstoßelement (17) eine Anstoßwand (20) aufweist, an der die hinteren Enden (11a) der zugeführten Metallstangen (11) anliegen können.

6. Vorrichtung gemäß Anspruch 5, **dadurch gekennzeichnet, dass** die Anstoßwand (20) eine Anstoßfläche (20a) aufweist, an der der Magnetabschnitt (19) vorgesehen ist, der den hinteren Enden (11a) der Metallstangen (11) zugewandt ist.

7. Vorrichtung gemäß irgendeinem vorhergehenden Anspruch, **dadurch gekennzeichnet, dass** die Ausricht- und Verschiebe-Einheit (15) ein Anstoßelement und ein Schubelement aufweist, die funktional unabhängig voneinander sind und in der Lage sind, zu unterschiedlichen Zeiten und auf unterschiedliche Weisen auf die hinteren Enden (11a) der Metallstangen (11) einzuwirken.

8. Vorrichtung gemäß irgendeinem vorhergehenden Anspruch, **dadurch gekennzeichnet, dass** sie Verteilungsmittel (26) aufweist, die stromabwärts von der Schneideeinheit (16) angeordnet sind und in der Lage sind, die geschnittenen Segmente (12) wahlweise in bestimmte Aufnahmekörbe und/oder in Richtung zu einer oder mehr automatischen Arbeitsmaschinen zu führen.

9. Verfahren zum Zuführen und Schneiden von Metallstangen (11), aufweisend: mindestens einen ersten Schritt, in dem eine Mehrzahl der Metallstangen (11) mittels einer Ausricht- und Verschiebe-Einheit (15) in Längsrichtung ausgerichtet werden, einen zweiten Schritt, in dem die ausgerichteten Metallstangen (11) mindestens einer Schneideeinheit (16) zugeführt werden, und einen dritten Schritt, in dem die Metallstangen (11) mittels der Schneideeinheit (16) aufeinanderfolgend in Segmente (12) einer gewünschten Länge geschnitten werden, **dadurch gekennzeichnet, dass** in dem ersten Schritt mindestens ein erster Teilschritt vorgesehen ist, in dem die Metallstangen (11) bezüglich einander in Längsrichtung ausgerichtet werden, durch die Einwirkung eines Anstoßelements (17), das auf die jeweiligen hinteren Enden (11a) einwirkt und mit mindestens einem Magnetabschnitt (19) ausgestattet ist, der den hinteren Enden (11a) der Metallstangen (11) zugewandt ist und eingerichtet ist, um eine magnetische oder elektromagnetische Anziehungskraft auf die hinteren Enden (11a) auszuüben, um die Metallstangen (11) anzuziehen und die jeweiligen hinteren Enden (11a) im wesentlichen ausgerichtet und in Kontakt mit dem Anstoßelement (17) zu halten.

10. Verfahren gemäß Anspruch 9, **dadurch gekennzeichnet, dass** in dem ersten Schritt ein zweiter Teilschritt vorgesehen ist, in dem die Metallstangen (11) an ihren hinteren Enden (11a) von dem Anstoßelement (17) angeschoben werden, bis die Metallstangen (11) zu der Schneideeinheit (16) und über diese hinaus befördert werden.

11. Verfahren gemäß Anspruch 10, **dadurch gekennzeichnet, dass** das Anstoßelement (17) die Metallstangen (11) zumindest so lange anschiebt, bis es die hinteren Enden (11a) in einen vorbestimmten Anfangsabstand (D) zu der Schneideeinheit (16) bringt.

12. Verfahren gemäß Anspruch 11, **dadurch gekennzeichnet, dass** der vorbestimmte Anfangsabstand (D) ein Vielfaches der Abmessung und Anzahl der Segmente (12) beträgt, in die die Metallstangen (11) aufzuteilen sind.

## Revendications

1. Appareil pour faire avancer et pour cisailler des barres métalliques, comprenant au moins une unité de cisaillage (16) pouvant cisailler séquentiellement lesdites barres métalliques (11) en segments (12) de longueur voulue, et une unité d'alignement et de translation (15) pouvant faire avancer lesdites barres métalliques (11) vers ladite unité de cisaillage (16), et munie d'un élément butoir (17) propre à coopérer avec les extrémités (11a) desdites barres métalliques (11) afin de les aligner longitudinalement les unes par rapport aux autres, **caractérisé en ce que** ledit élément butoir (17) comprend au moins une partie magnétique (19) tournée face aux extrémités (11a) desdits barres métalliques (11) et conçue de manière à exercer une force d'attraction magnétique ou électromagnétique sur lesdites extrémités (11a), afin d'attirer vers elle lesdites barres métalliques (11) et de maintenir sensiblement l'alignement des extrémités correspondantes (11a) et leur contact avec ledit élément butoir (17).

2. Appareil selon la revendication 1, **caractérisé en ce que** ladite partie magnétique (19) comprend un électroaimant pouvant être sélectivement activé et/ou ajusté en fonction des différentes étapes opératoires et/ou des différents types de barres métalliques (11).

3. Appareil selon la revendication 1, **caractérisé en ce que** ladite partie magnétique (19) comprend un aimant permanent.

4. Appareil selon l'une quelconque des revendications précédentes, **caractérisé en ce que** ledit élément butoir (17) est sélectivement mobile par rapport à ladite unité de cisaillage (16) dans une direction sensiblement parallèle à l'axe longitudinal desdites barres métalliques (11), de manière à exercer également une poussée sur les extrémités (11a) des barres métalliques (11) pour les amener vers l'unité de cisaillage (16) et au-delà.

5. Appareil selon l'une quelconque des revendications précédentes, **caractérisé en ce que** ledit élément butoir (17) comprend une paroi de butée (20) contre laquelle peuvent s'appuyer les extrémités (11a) des barres métalliques (11) que l'on a fait avancer.

6. Appareil selon la revendication 5, **caractérisé en ce que** ladite paroi de butée (20) comprend une surface de butée (20a) sur laquelle est ménagée ladite partie magnétique (19), tournée face aux extrémités (11a) des barres métalliques (11).

7. Appareil selon l'une quelconque des revendications précédentes, **caractérisé en ce que** ladite unité d'alignement et de translation (15) comprend un élément butoir et un élément pousseur fonctionnant indépendamment l'un de l'autre et pouvant agir sur les extrémités (11a) des barres métalliques (11), à différents moments et de différentes façons.

8. Appareil selon l'une quelconque des revendications précédentes, **caractérisé en ce qu'**il comprend un moyen de distribution (26) placé en aval de ladite unité de cisaillage (16) et pouvant diriger sélectivement les segments (12) cisaillés dans des bacs receveurs spécifiques et/ou vers une ou plusieurs machines de travail automatiques.

9. Procédé pour faire avancer et cisailler des barres métalliques (11), comprenant au moins une première étape au cours de laquelle une pluralité desdites barres métalliques (11) sont alignées longitudinalement au moyen d'une unité d'alignement et de translation (15) ; une deuxième étape au cours de laquelle on fait avancer lesdites barres métalliques (11) vers au moins une unité de cisaillage (16) ; et une troisième étape au cours de laquelle lesdites barres métalliques (11) sont cisaillées séquentiellement en segments (12) de longueur voulue au moyen de ladite unité de cisaillage (16), **caractérisé en ce que** ladite première étape prévoit au moins une première sous-étape au cours de laquelle lesdites barres métalliques (11) sont alignées longitudinalement les unes par rapport aux autres sous l'action d'un élément butoir (17) agissant sur leurs extrémités respectives (11a) et muni d'au moins une partie magnétique (19), tournée face aux extrémités (11a) desdits barres métalliques (11) et conçue de manière à exercer une force d'attraction magnétique ou électromagnétique sur lesdites extrémités (11a), afin d'attirer vers elle lesdites barres métalliques (11) et de maintenir sensiblement l'alignement des extrémités correspondantes (11a) et leur contact avec ledit élément butoir (17).

10. Procédé selon la revendication 9, **caractérisé en ce que** ladite première étape prévoit une seconde sous-étape au cours de laquelle ledit élément butoir (17) pousse lesdites barres métalliques (11) par leurs extrémités (11a) jusqu'à les amener vers l'unité de cisaillage (16) et au-delà.

11. Procédé selon la revendication 10, **caractérisé en ce que** ledit élément butoir (17) pousse lesdites barres métalliques (11) jusqu'à ce qu'il amène au moins lesdites extrémités (11a) à une distance initiale prédéfinie (D) de la ladite unité de cisaillage (16).

12. Procédé selon la revendication 11, **caractérisé en ce que** ladite distance initiale prédéfinie (D) est un multiple de la mesure et du nombre des segments (12) dont il est prévu de diviser lesdites barres métalliques (11).
